# EUROPÄISCHE PATENTSCHRIFT

(11) **EP 1 528 301 B1**
(45) Veröffentlichungstag und Bekanntmachung des Hinweises auf die Patenterteilung: **13.06.2007**
(21) Anmeldenummer: 05002745.7
(22) Anmeldetag: 17.04.2003
(51) Int. Cl.: F16J 15/08, F16J 15/06

(54) **Zylinderkopfdichtung**
Cylinder head gasket
Joint de culasse

(30) Priorität: 24.04.2002 DE 10218245
(43) Veröffentlichungstag der Anmeldung: 04.05.2005
(62) Teilanmeldung aus: 03008746.4
(73) Patentinhaber: ElringKlinger AG, 72581 Dettingen (DE)
(72) Erfinder: Diez, Armin, 73252 Lenningen (DE)
(74) Vertreter: Hoeger, Stellrecht & Partner Patentanwälte

(56) Entgegenhaltungen:
- EP-A- 0 915 272
- EP-A- 1 111 277
- DE-A- 10 005 455
- DE-A- 19 928 602
- FR-A- 2 814 777
- US-A- 5 568 932

## Beschreibung

Die vorliegende Erfindung betrifft eine Zylinderkopfdichtung, die mindestens eine Dichtungsplatte mit mindestens einer Brennraum-Durchgangsöffnung und einer die Brennraum-Durchgangsöffnung umschließenden, elastisch höhenverformbaren Brennraumsicke und mindestens eine die Verformung der Brennraumsicke begrenzende Verformungsbegrenzungseinrichtung umfaßt.

Solche Zylinderkopfdichtungen sind aus dem Stand der Technik bekannt.

Durch die häufig auch als Stopper bezeichnete Verformungsbegrenzungseinrichtung wird die Brennraumsicke gegen unzulässige Verformung geschützt. Gleichzeitig bildet die Verformungsbegrenzungseinrichtung eine partielle Verdickung der Dichtung, durch welche die Motorbauteile, die an die Zylinderkopfdichtung angrenzen, so vorgespannt werden, daß die dynamische Dichtspaltschwingung reduziert wird.

Um eine unzulässige Verformung der Brennraumsicke mit Sicherheit auszuschließen, wird der Stopper in der Regel starr ausgebildet.

Da die Steifigkeit der an die Zylinderkopfdichtung angrenzenden Motorbauteile längs der Umfangsrichtung der Brennraum-Durchgangsöffnung variiert, ist auch die Pressungsverteilung im Bereich der Verformungsbegrenzungseinrichtung ungleichmäßig, was zu Gasleckagen aus dem Brennraum führen kann. Daher kann eine Höhenprofilierung der Verformungsbegrenzungseinrichtung zur Vergleichmäßigung der Pressung vorgesehen sein.

Die Verformungsbegrenzungseinrichtung wird für einen bestimmten Betriebszustand des Motors ausgelegt. Ändert sich aufgrund von Änderungen der Temperatur der an die Zylinderkopfdichtung angrenzenden Motorbauteile und der dadurch bedingten lokal unterschiedlichen thermischen Dehnungen die lokale Dichtspalthöhe, so ist die Verformungsbegrenzungseinrichtung an diese neuen Betriebsbedingungen nicht mehr optimal angepasst.

Die DE 100 05 455 A und die DE 199 28 602 A offenbaren Zylinderkopfdichtungen mit den Merkmalen des Oberbegriffs von Anspruch 1.

Der vorliegenden Erfindung liegt die Aufgabe zugrunde, eine Zylinderkopfdichtung der eingangs genannten Art zu schaffen, bei der die Verformungsbegrenzungseinrichtung über einen weiten Bereich von Betriebsbedingungen des Motors hinweg einen ausreichenden Schutz der Brennraumsicke und eine ausreichende Dichtflächenpressung gewährleistet.

Diese Aufgabe wird erfindungsgemäß durch eine Zylinderkopfdichtung nach Anspruch 1 gelöst.

Unter der Höhe eines Elements ist dabei im Rahmen dieser Beschreibung und der beigefügten Ansprüche die Ausdehnung des betreffenden Elements in einer zu den Hauptflächen der Dichtungsplatten der Zylinderkopfdichtung senkrechten Richtung zu verstehen.

Der erfindungsgemäßen Lösung liegt das Konzept zugrunde, die auf die Brennraumsicke und die Verformungsbegrenzungseinrichtung wirkenden dynamischen Dichtspaltschwingungen bei einer Änderung des Betriebszustands des Motors eine kleinere betriebszustandsbedingte Veränderung erfahren zu lassen, als dies ohne die Kompensationseinrichtung der Fall wäre.

Im Idealfall werden die Änderungen der dynamischen Dichtspaltschwingungen durch die Kompensationseinrichtung im wesentlichen vollständig kompensiert, so daß die Brennraumsicke und die Verformungsbegrenzungseinrichtung, die derselben zugeordnet ist, in jedem Betriebszustand der Zylinderkopfdichtung im wesentlichen denselben Pressungsbedingungen unterworfen sind.

Dadurch kann die Gestaltung der Verformungsbegrenzungseinrichtung, insbesondere eine Höhen- oder Breitenprofilierung derselben, für diese im wesentlichen konstanten Pressungsbedingungen optimiert werden.

Insbesondere kann vorgesehen sein, daß die Höhe des Kompensationselements sich in Abhängigkeit von der Temperatur der an die Zylinderkopfdichtung angrenzenden Motorbauteile verändert.

Ferner kann vorgesehen sein, daß die Höhe des Kompensationselements sich in Abhängigkeit von der auf die Zylinderkopfdichtung einwirkenden lokalen Flächenpressung verändert.

Auch eine Änderung der Temperatur kann eine Änderung der lokalen Flächenpressung bewirken, wenn die an die Zylinderkopfdichtung angrenzenden Motorbauteile lokal unterschiedliche Wärmedehnungen aufweisen.

Da die Kompensationseinrichtung nicht die Dichtspaltschwingungen selbst, sondern lediglich die Variation der mittleren Dichtspalthöhe, die bei einer Veränderung des Betriebszustands auftritt, kompensieren soll, ist vorteilhafterweise vorgesehen, daß die Höhe des Kompensationselements einer Änderung des Betriebszustands des Motors mit einer Relaxationszeit folgt, welche größer ist als ein Arbeitszyklus des Motors.

Günstig ist es, wenn die Relaxationszeit größer ist als eine 1/10 Sekunde, vorzugsweise größer ist als eine Sekunde, insbesondere größer ist als eine Minute.

Um längs der Umfangsrichtung der Brennraum-Durchgangsöffnung variierende betriebszustandsabhängige Veränderungen der Dichtspalthöhe ausgleichen zu können, ist bei einer besonderen Ausgestaltung der Erfindung vorgesehen, daß das Kompensationselement sich in der Längsrichtung der Brennraumsicke erstreckt und daß die Änderung der Höhe des Kompensationselements in Abhängigkeit vom Betriebszustand des Motors längs der Längsrichtung des Kompensationselements variiert.

Da es wichtiger ist, die Variationen der Dichtspaltänderung in Umfangsrichtung der Brennraum-Durchgangsöffnung auszugleichen als die über den Umfang der Brennraum-Durchgangsöffnung gemittelte Dichtspalthöhenänderung, ist bei einer besonderen Ausgestaltung der Erfindung vorgesehen, daß die über die gesamte Länge des Kompensationselements gemittelte betriebszustandsabhängige Änderung der Höhe des Kompensationselements im wesentlichen null ist.

Dies kann insbesondere dadurch erreicht werden, daß in dem Kompensationselement enthaltenes fließfähiges Material von einer Stelle, an welcher sich der Dichtspalt bei einer Betriebszustandsänderung nicht oder nur wenig vergrößert, zu einer Stelle fließt an welcher sich die Dichtspalthöhe bei der betreffenden Betriebszustandsänderung stärker vergrößert.

Um zu erreichen, daß die Brennraumsicke auf nahezu konstantem Nebenschlußmaß mit der Verformungsbegrenzungseinrichtung gehalten wird, ist vorzugsweise vorgesehen, daß die Kompensationseinrichtung mindestens ein Kompensationselement umfaßt, welches sowohl die Brennraumsicke als auch die Verformungsbegrenzungseinrichtung zumindest teilweise abstützt. Dadurch wird erreicht, daß der Sickenaufstandsbereich gemeinsam mit der Verformungsbegrenzungseinrichtung ausfedert.

Alternativ oder ergänzend hierzu kann auch vorgesehen sein, daß die Kompensationseinrichtung mindestens ein Kompensationselement, welches die Brennraumsicke zumindest teilweise abstützt, und mindestens ein weiteres Kompensationselement umfaßt, welches die Verformungsbegrenzungseinrichtung zumindest teilweise abstützt.

In jedem Fall ist es von Vorteil, wenn die Gesamthöhe der die Brennraumsicke abstützenden Kompensationselemente im wesentlichen gleich groß ist wie die Gesamthöhe der die Verformungsbegrenzungseinrichtung abstützenden Kompensationselemente.

Die Kompensationseinrichtung kann im wesentlichen spiegelsymmetrisch zu einer Mittelebene derselben ausgebildet sein.

Es kann beispielsweise vorgesehen sein, daß die Kompensationseinrichtung ein elastisch höhenveränderliches Kompensationselement umfaßt.

Die Kompensationseinrichtung kann eine Kompensationssicke umfassen, die eine höhere Steifigkeit, also eine größere Federkonstante, aufweist als die Brennraumsicke.

Um mit einer solchen Kompensationssicke die Brennraumsicke abstützen zu können, ist vorteilhafterweise vorgesehen, daß ein äußerer Sickenrand der Kompensationssicke in einem größeren Abstand vom Mittelpunkt der Brennraum-Durchgangsöffnung verläuft als ein innerer Sickenrand der Brennraumsicke.

Um mittels der Kompensationssicke die Verformungsbegrenzungseinrichtung abstützen zu können, ist vorteilhafterweise vorgesehen, daß ein innerer Sickenrand der Kompensationssicke in einem kleineren Abstand vom Mittelpunkt der Brennraum-Durchgangsöffnung verläuft als ein äußerer Rand der Verformungsbegrenzungseinrichtung.

Bei bevorzugten Ausgestaltungen der erfindungsgemäßen Zylinderkopfdichtung umfaßt die Kompensationseinrichtung mindestens zwei Kompensationssicken.

Diese beiden Kompensationssicken können an derselben Kompensationsplatte der Kompensationseinrichtung ausgebildet sein.

Ferner ist es möglich, daß mindestens zwei Kompensationssicken an zwei verschiedenen Kompensationsplatten der Kompensationseinrichtung ausgebildet sind.

Die Kompensationssicken können insbesondere als Vollsicken ausgebildet sein, deren Kuppen einander zugewandt sind.

Alternativ hierzu kann auch vorgesehen sein, daß die Kompensationssicken als Vollsicken ausgebildet sind, deren Kuppen einander abgewandt sind.

Um ein gedämpft-elastisches Kompensationselement zu bilden, ist vorgesehen, daß die Kompensationseinrichtung mindestens eine mit einem fließfähigen Material zumindest teilweise gefüllte Kompensationssicke umfaßt.

Eine solche gefüllte Kompensationssicke zeigt ein gedämpft-elastisches Schwingungsverhalten und paßt sich bei einer Änderung der lokalen Dichtspalthöhe gemäß einer Exponentialfunktion mit einer Relaxationszeit τ an eine neue mittlere Sickenhöhe an, so daß das so gebildete gedämpft-elastische Kompensationselement nur stark gedämpfte Schwingungen um die mittlere lokale Sickenhöhe ausführt, was für eine effiziente Kompensation der betriebszustandsbedingten Änderung der mittleren lokalen Dichtspalthöhe besonders günstig ist.

Das fließfähige Material kann beispielsweise Polytetrafluorethylen oder ein modifiziertes Polytetrafluorethylen sein.

Unter einem modifizierten Polytetrafluorethylen ist dabei ein Polytetrafluorethylen-ähnlicher Stoff zu verstehen, bei welchem die Molekülstruktur des Polytetrafluorethylen dadurch chemisch modifiziert worden ist, daß die Fluoratome des Polytetrafluorethylen teilweise durch Substituenten ersetzt sind.

Dem Polytetrafluorethylen oder dem modifizierten Polytetrafluorethylen können organische oder anorganische Füllstoffe zugemischt sein.

Ferner kann als fließfähiges Material auch ein metallisches Material, insbesondere eine metallische Legierung, vorzugsweise eine Pb-Legierung, beispielsweise eine Pb-Sn-Legierung, verwendet werden.

Durch das fließfähige Material in der Kompensationseinrichtung können lokale Dichtspaltänderungen, welche durch eine Änderung des Betriebszustandes des Motors hervorgerufen werden, besonders gut kompensiert werden, da das fließfähige Material sich längs des Umfangs der Kompensationseinrichtung in Abhängigkeit von den jeweiligen Pressungsverhältnissen bei jedem Betriebszustand des Motors anders verteilen kann.

Wenn vorteilhafterweise vorgesehen ist, daß das fließfähige Material in einer geschlossenen Kammer angeordnet ist, so wird dadurch erreicht, daß das Gesamtvolumen des fließfähigen Materials in der Kompensationseinrichtung im wesentlichen konstant ist, so daß eine lokale Erhöhung oder Erniedrigung des gedämpft-elastischen Kompensationselements mit einer entsprechend entgegengesetzten Erniedrigung bzw. Erhöhung desselben an einer anderen Stelle längs der Umfangsrichtung der Brennraum-Durchgangsöffnung einhergeht.

Die geschlossene Kammer kann insbesondere von zwei miteinander verbundenen Dichtungsplatten der Zylinderkopfdichtung gebildet sein.

Die beiden Dichtungsplatten können beispielsweise durch Verschweißen miteinander verbunden sein.

Alternativ oder ergänzend zu einem gedämpft-elastischen Kompensationselement kann die Kompensationseinrichtung mindestens ein plastisch-reversibel höhenveränderliches Kompensationselement umfassen.

Ein solches plastisch-reversibles Kompensationselement kann insbesondere eine mit einem fließfähigen Material zumindest teilweise gefüllte Kammer umfassen.

Diese Kammer kann insbesondere von zwei miteinander verbundenen Dichtungsplatten der Zylinderkopfdichtung gebildet sein.

Diese beiden Dichtungsplatten können beispielsweise durch Verschweißen miteinander verbunden sein.

Ferner ist vorteilhafterweise vorgesehen, daß mindestens eine der die Kammer bildenden Dichtungsplatten mit mindestens einer Abkröpfung versehen ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf eine Zylinderkopfdichtung mit einer Brennraum-Durchgangsöffnung, einer die Brennraum-Durchgangsöffnung umschließenden, elastisch höhenverformbaren Brennraumsicke und mit einer die Verformung der Brennraumsicke begrenzenden Verformungsbegrenzungseinrichtung;
- Fig. 2: einen schematischen Schnitt durch die Zylinderkopfdichtung aus Fig. 1 längs der Linie 2-2 in Fig. 1 bei einer nicht erfindungsgemäßen ersten Ausführungsform der Zylinderkopfdichtung, die eine Kompensationseinrichtung mit zwei elastischen Kompensationssicken umfaßt;
- Fig. 3: einen der Darstellung der Fig. 2 entsprechenden schematischen Querschnitt durch eine nicht erfindungsgemäße zweite Ausführungsform einer Zylinderkopfdichtung mit einer zwei Paare von Kompensationssicken umfassenden Kompensationseinrichtung, wobei die Kompensationssicken eines Paares jeweils einander zugewandt sind;
- Fig. 4: einen der Fig. 2 entsprechenden schematischen Querschnitt durch eine nicht erfindungsgemäße dritte Ausführungsform einer Zylinderkopfdichtung mit einer Kompensationseinrichtung, die zwei Paare von Kompensationssicken umfaßt, wobei die Kompensationssicken eines Paares jeweils einander abgewandt sind;
- Fig. 5: einen der Fig. 2 entsprechenden schematischen Querschnitt durch eine vierte Ausführungsform einer Zylinderkopfdichtung mit einer Kompensationseinrichtung, die zwei gedämpft-elastische Kompensationselemente umfaßt;
- Fig. 6: einen der Fig. 2 entsprechenden schematischen Querschnitt durch eine fünfte Ausführungsform einer Zylinderkopfdichtung mit einer Kompensationseinrichtung, die vier gedämpft-elastische Kompensationselemente umfaßt;
- Fig. 7: einen der Fig. 2 entsprechenden schematischen Querschnitt durch eine sechste Ausführungsform einer Zylinderkopfdichtung mit einer Kompensationseinrichtung, die zwei gedämpft-elastische Kompensationselemente umfaßt; und
- Fig. 8: einen der Fig. 2 entsprechenden schematischen Querschnitt durch eine siebte Ausführungsform einer Zylinderkopfdichtung mit einer Kompensationseinrichtung, die ein plastisch-reversibles Kompensationselement umfaßt.

Gleiche oder funktional äquivalente Elemente sind in allen Figuren mit denselben Bezugszeichen bezeichnet.

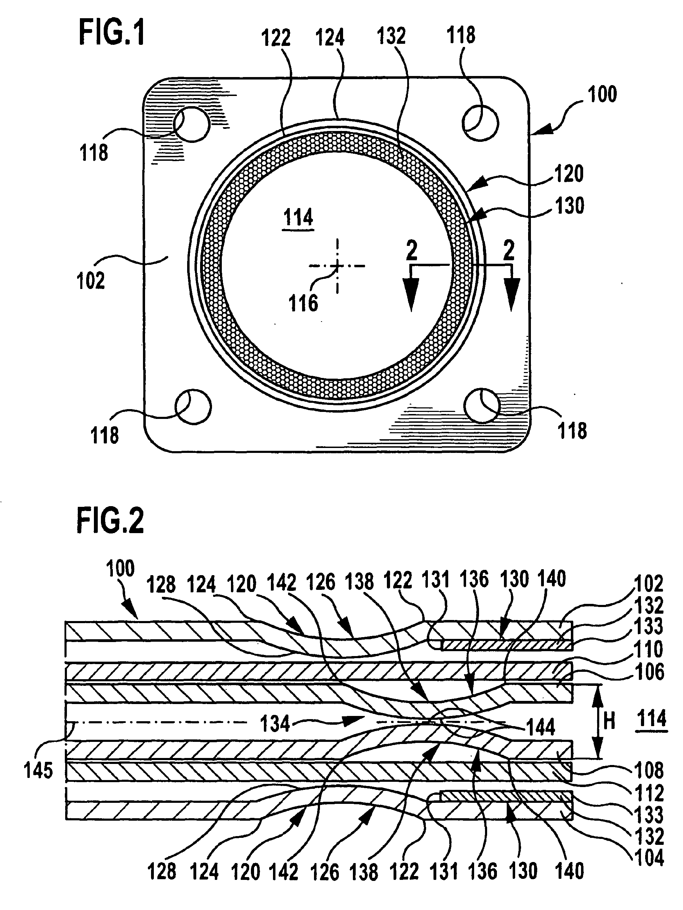

Eine in den Fig. 1 und 2 dargestellte, als Ganzes mit 100 bezeichnete Zylinderkopfdichtung umfaßt, wie am besten aus Fig. 2 zu ersehen ist, eine obere gesickte Deckplatte 102, eine untere gesickte Deckplatte 104, eine zwischen der oberen gesickten Deckplatte 102 und der unteren gesickten Deckplatte 104 angeordnete obere Kompensationsplatte 106, eine zwischen der oberen Kompensationsplatte 106 und der unteren gesickten Deckplatte 104 angeordnete untere Kompensationsplatte 108, eine zwischen der oberen gesickten Deckplatte 102 und der oberen Kompensationsplatte 106 angeordnete obere Zwischenplatte 110 sowie eine zwischen der unteren gesickten Deckplatte 104 und der unteren Kompensationsplatte 108 angeordnete untere Zwischenplatte 112.

Jede der Platten der Zylinderkopfdichtung ist durch Ausstanzen aus einem im wesentlichen metallischen Material gebildet und weist eine im wesentlichen kreisförmige Brennraum-Durchgangsöffnung 114 mit einem Mittelpunkt 116 auf, wobei die Brennraum-Durchgangsöffnungen 114 in den verschiedenen Platten der Zylinderkopfdichtung 100 im wesentlichen miteinander fluchten.

Ferner ist jede der Platten der Zylinderkopfdichtung 100 mit mehreren Befestigungsmittel-Durchgangsöffnungen 118 versehen, welche dem Durchtritt von Befestigungsmitteln, insbesondere Zylinderkopfschrauben, mittels welcher die an die Zylinderkopfdichtung 100 angrenzenden Motorbauteile (Motorblock und Zylinderkopf) gegeneinander verspannt werden, durch die Zylinderkopfdichtung 100 dienen, wobei die Befestigungsmittel-Durchgangsöffnungen 118 der verschiedenen Platten der Zylinderkopfdichtung 100 im wesentlichen miteinander fluchten.

Zur Abdichtung des Brennraums gegen den Austritt von Brenngasen sind die obere gesickte Deckplatte 102 und die untere gesickte Deckplatte 104 mit jeweils einer die Brennraum-Durchgangsöffnung 114 ringförmig umschließenden Brennraumsicke 120 versehen.

Im hier beschriebenen Ausführungsbeispiel sind die Brennraumsicken 120 als Vollsicken mit einem im wesentlichen U-förmigen Querschnitt ausgebildet, welche zur Brennraum-Durchgangsöffnung 114 hin durch einen inneren Sickenrand 122 und auf ihrer der Brennraum-Durchgangsöffnung 114 abgewandten Seite durch einen äußeren Sickenrand 124 begrenzt sind. Der zwischen dem inneren Sickenrand 122 und dem äußeren Sickenrand 124 liegende Bereich der oberen gesickten Deckplatte 102 bzw. der unteren Deckplatte 104 bildet jeweils einen Sickenaufstandsbereich 126, welcher zu der jeweils benachbarten Zwischenplatte 110 bzw. 112 hin vorgewölbt ist und dessen Kuppe 128 die Abdichtlinie der jeweiligen Sicke 120 definiert.

Damit die Sicken 120 unter dem Einfluß der von den Zylinderkopfschrauben erzeugten Druckkräfte sowie der im Motorbetrieb auftretenden, periodisch schwankenden Drücke nicht übermäßig abgeflacht werden können, ist jeder der Brennraumsicken 120 jeweils eine Verformungsbegrenzungsvorrichtung 130 zugeordnet, welche üblicherweise auch als Stopper bezeichnet wird.

Bei den hier dargestellten Ausführungsbeispielen umfaßt jede der Verformungsbegrenzungseinrichtungen 130 jeweils ein ringförmiges Verformungsbegrenzungselement 132, welches im Bereich zwischen der jeweiligen Brennraumsicke 120 und der Brennraum-Durchgangsöffnung 114 angeordnet und auf derjenigen Seite der jeweiligen gesickten Deckplatte 102, 104, auf welcher sich die jeweilige Brennraumsicke 120 vorwölbt, festgelegt ist, beispielsweise durch Verschweißung.

Alternativ hierzu könnte die Verformungsbegrenzungseinrichtung 130 beispielsweise auch dadurch gebildet werden, daß der an die Brennraum-Durchgangsöffnung 114 grenzende Randbereich der jeweiligen gesickten Deckplatte 102, 104 umgebördelt wird.

Ferner könnten die Verformungsbegrenzungseinrichtungen 130 statt an den gesickten Deckplatten 102, 104 auch an den Zwischenplatten 110, 112 angeordnet sein.

Durch die Verformungsbegrenzungseinrichtung 130 wird die jeweils zugeordnete Brennraumsicke 120 gegen unzulässige Verformung geschützt, so daß im Motorbetrieb im Bereich der Brennraumsicke 120 keine Risse in den Decklagen 102, 104 entstehen und die Brennraumsicken 120 die erforderlichen federelastischen Eigenschaften behalten.

Um betriebszustandsabhängige Variationen der dynamischen Schwingung des Dichtspalts zwischen dem Motorblock und dem Zylinderkopf ausgleichen zu können, weist die Zylinderkopfdichtung 100 ferner eine als Ganzes mit 134 bezeichnete Kompensationseinrichtung auf, welche bei der in Fig. 2 dargestellten, nicht erfindungsgemäßen, aber das Verständnis der Erfindung erleichternden ersten Ausführungsform einer Zylinderkopfdichtung 100 zwei elastische Kompensationselemente 136 umfaßt, welche jeweils als eine an einer der Kompensationsplatten 106, 108 vorgesehene Kompensationssicke 138 ausgebildet sind.

Jede der elastisch höhenveränderlichen Kompensationssicken 138 erstreckt sich ringförmig um die Brennraum-Durchgangsöffnung 114 und wird zur Brennraum-Durchgangsöffnung 114 hin durch einen inneren Sickenrand 140 begrenzt, welcher zwischen dem radial inneren Rand 133 und dem radial äußeren Rand 131 des Verformungsbegrenzungselements 132 verläuft.

Auf ihrer der Brennraum-Durchgangsöffnung 114 abgewandten Seite wird jede der Kompensationssicken 138 durch einen äußeren Sickenrand 142 begrenzt, welcher zwischen dem inneren Sickenrand 122 und dem äußeren Sickenrand 124 der Brennraumsicke 119 verläuft und vorzugsweise im wesentlichen den gleichen Abstand vom Mittelpunkt 116 der Brennraum-Durchgangsöffnung 114 aufweist wie die die Abdichtlinie der Brennraumsicke 120 definierende Kuppe 128.

Die Kuppen 144 der beiden Kompensationssicken 138 sind einander zugewandt und weisen beide im wesentlichen denselben Abstand vom Mittelpunkt 116 der Brennraum-Durchgangsöffnung 114 auf wie der innere Sickenrand 122 der Brennraumsicken 120.

Durch die zwischen der oberen Kompensationsplatte 106 und der oberen gesickten Deckplatte 102 angeordnete obere Zwischenplatte 110 wird verhindert, daß sich die Sickenränder 140, 142 der Kompensationssicke 138 der oberen Kompensationsplatte 106 in die Brennraumsicke 120 bzw. in das Verformungsbegrenzungselement 132 an der oberen gesickten Deckplatte 102 eingraben und so die Brennraumsicke 120 bzw. das Verformungsbegrenzungselement 132 beschädigen und deren Funktion beeinträchtigen.

In entsprechender Weise verhindert die zwischen der unteren Kompensationsplatte 108 und der unteren gesickten Deckplatte 104 angeordnete untere Zwischenplatte 112 eine Beschädigung der Brennraumsicke 120 und des Verformungsbegrenzungselements 132 an der unteren gesickten Deckplatte 104 durch die Sickenränder 140, 142 der Kompensationssicke 138 der unteren Kompensationsplatte 108.

Die Kompensationseinrichtung 134 ist symmetrisch zu einer Mittelebene 145 derselben ausgebildet, welche parallel zu den Hauptflächen der Dichtungsplatten der Zylinderkopfdichtung 100 ausgerichtet ist.

Dadurch, daß die Kompensationssicken 138 - senkrecht zu den Hauptflächen der Platten der Zylinderkopfdichtung 100 gesehen - sowohl die Brennraumsicken 120 als auch die Verformungsbegrenzungselemente 132 der Verformungsbegrenzungseinrichtungen 130 jeweils teilweise überlappen, stützt die Kompensationseinrichtung 134 sowohl die Brennraumsicken 120 als auch die Verformungsbegrenzungseinrichtungen 130 zumindest teilweise ab, so daß sich eine Änderung der Höhe H der Kompensationseinrichtung 134, welche sich aus den Höhen der beiden Kompensationssicken 138 zusammensetzt, gleichermaßen auf die Brennraumsicken 120 wie auch auf die Verformungsbegrenzungseinrichtungen 130 auswirkt.

Unter der Höhe eines Elements ist dabei im Rahmen dieser Beschreibung und der beigefügten Ansprüche die Ausdehnung des betreffenden Elements in einer zu den Hauptflächen der Platten der Zylinderkopfdichtung 100 senkrechten Richtung zu verstehen.

Nimmt die mittlere Dichtspalthöhe an einer Stelle des Umfangs der Brennraum-Durchgangsöffnung 114 zu, so federn die Kompensationssicken 138 aus, und die Gesamthöhe H der Kompensationseinrichtung 134 erhöht sich, wodurch die betriebszustandsbedingte lokale Dichtspalterhöhung wieder ausgeglichen wird.

Die auf die Brennraumsicken 120 und die Verformungsbegrenzungseinrichtungen 130 wirkenden dynamischen Dichtspaltschwingungen erfahren durch diese Kompensationswirkung der Kompensationseinrichtung 134 eine kleinere betriebszustandsbedingte Veränderung, als dies ohne die Kompensationseinrichtung 134 der Fall wäre.

Im Idealfall werden die Änderungen der dynamischen Dichtspaltschwingungen durch die Kompensationseinrichtung 134 im wesentlichen vollständig kompensiert, so daß die Brennraumsicken 120 und die Verformungsbegrenzungseinrichtungen 130 in jedem Betriebszustand der Zylinderkopfdichtung 100 im wesentlichen denselben Pressungsbedingungen unterworfen sind. Dadurch kann insbesondere die Gestaltung des Verformungsbegrenzungselements 132 der Verformungsbegrenzungseinrichtung 130 für diese im wesentlichen konstanten Pressungsbedingungen optimiert werden.

Insbesondere kann vorgesehen sein, daß die Höhe und/oder die Breite des Verformungsbegrenzungselements 132 längs der Umfangsrichtung der Brennraum-Durchgangsöffnung 114 variiert, um lokale Ungleichmäßigkeiten der Pressungsverteilung, welche von lokal unterschiedlichen Steifigkeiten und/oder Wärmedehnungen der an die Zylinderkopfdichtung 100 angrenzenden Motorbauteile oder von unterschiedlichen Abständen zu den die angrenzenden Motorbauteile miteinander verspannenden Zylinderkopfschrauben herrühren können, so weit wie möglich auszugleichen.

Nimmt die mittlere lokale Dichtspalthöhe an einer Stelle des Umfangs der Brennraum-Durchgangsöffnung 114 ab, so werden die Kompensationssicken 138 flachergedrückt, so daß sich die Gesamthöhe H der Kompensationseinrichtung 134 vermindert und auf diese Weise die lokale, betriebszustandsabhängige Änderung der Dichtspalthöhe ausgeglichen wird.

Durch die Zwischenplatten 110 und 112 wird erreicht, daß die Kompensationseinrichtung 134 im wesentlichen gleichmäßig auf die Brennraumsicken 120 und auf die Verformungsbegrenzungseinrichtungen 130 wirkt, so daß die Brennraumsicken 120 auf nahezu konstantem Nebenschlußmaß gehalten werden.

Bei einer Änderung des Betriebszustandes der Zylinderkopfdichtung 100 federn somit die Verformungsbegrenzungseinrichtungen 130 und die jeweils zugeordneten Brennraumsicken 120 stets gemeinsam aus.

Die gesamte Variation der Höhe H der Kompensationseinrichtung 134 beträgt vorzugsweise höchstens 100 µm, insbesondere höchstens 40 µm.

Vorzugsweise ist der Querschnitt der Kompensationssicken 138 so gestaltet und sind die Materialstärke und die mechanischen Eigenschaften der Kompensationsplatten 106, 108 im Verhältnis zu denjenigen der gesickten Deckplatten 102, 104 so gewählt, daß die Kompensationssicken 138 eine deutlich niedrigere Resonanzfrequenz aufweisen als die Brennraumsicken 120

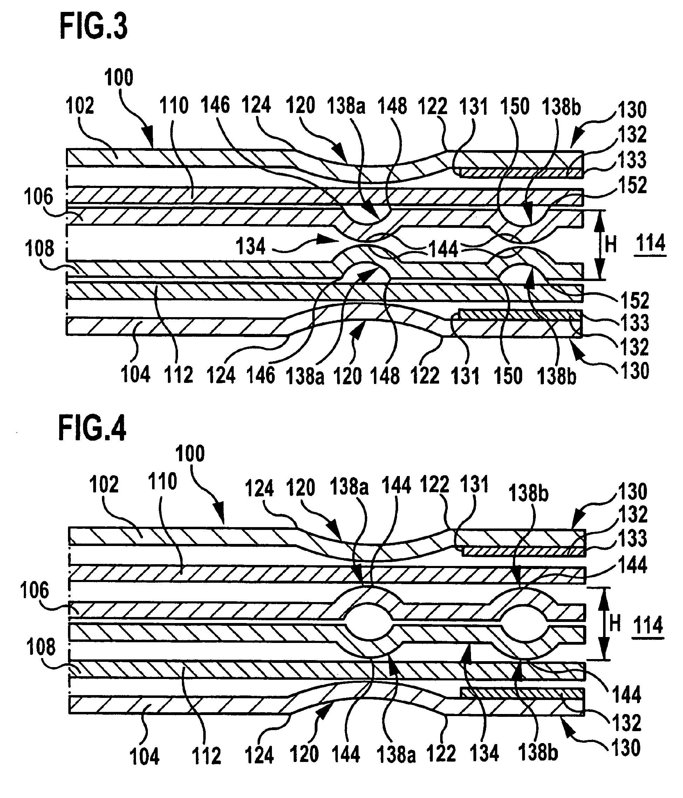

Eine in Fig. 3 dargestellte, nicht erfindungsgemäße, aber das Verständnis der Erfindung erleichternde zweite Ausführungsform einer Zylinderkopfdichtung 100 unterscheidet sich von der vorstehend beschriebenen ersten Ausführungsform dadurch, daß an jeder der Kompensationsplatten 106, 108 nicht nur lediglich eine Kompensationssicke 138, sondern statt dessen jeweils zwei elastische Kompensationssicken 138a und 138b ausgebildet sind.

Die jeweils radial äußeren Kompensationssicken 138a stützen die Brennraumsicken 120 ab und werden nach außen durch einen äußeren Sickenrand 146, der vom Mittelpunkt der Brennraum-Durchgangsöffnung 114 einen kleineren Abstand aufweist als der äußere Sickenrand 124 der Brennraumsicken 120, und nach innen durch einen inneren Sickenrand 148 begrenzt, der einen grö-ßeren Abstand vom Mittelpunkt 116 der Brennraum-Durchgangsöffnung 114 aufweist als der innere Sickenrand 122 der Brennraumsicken 120.

Die radial inneren Kompensationssicken 138b stützen die Verformungsbegrenzungseinrichtungen 130 ab und sind nach außen durch einen äußeren Sickenrand 150, welcher einen kleineren Abstand vom Mittelpunkt 116 der Brennraum-Durchgangsöffnung 114 aufweist als der äußere Rand 131 der Verformungsbegrenzungselemente 132, und nach innen durch einen inneren Sickenrand 152 begrenzt, welcher einen größeren Abstand vom Mittelpunkt 116 der Brennraum-Durchgangsöffnung 114 aufweist als der innere Rand 133 der Verformungsbegrenzungselemente 132.

Die Querschnitte der inneren Kompensationssicken 138b und der äußeren Kompensationssicken 138a stimmen im wesentlichen miteinander überein, so daß die inneren Kompensationssicken 138b und die äußeren Kompensationssicken 138a in jedem Betriebszustand der Dichtung im wesentlichen dieselbe Höhe aufweisen.

Dadurch ist gewährleistet, daß betriebszustandsabhängige Änderungen der Dichtspalthöhe durch die Kompensationseinrichtung 134 im Bereich der Brennraumsicken 120 in im wesentlichen derselben Weise kompensiert werden wie im Bereich der Verformungsbegrenzungseinrichtungen 130.

Die Kuppen 144 der inneren Kompensationssicken 138b berühren sich längs einer inneren Abdichtlinie der Kompensationseinrichtung 134, und die Kuppen 144 der äußeren Kompensationssicken 138a berühren sich längs einer äußeren Abdichtlinie der Kompensationseinrichtung 134, so daß die zweite Ausführungsform einer Zylinderkopfdichtung 100 zwei in radialer Richtung der Brennraum-Durchgangsöffnung 114 hintereinanderliegende Abdichtlinien aufweist, während die in Fig. 2 dargestellte erste Ausführungsform einer Zylinderkopfdichtung 100 nur eine solche Abdichtlinie innerhalb der Kompensationseinrichtung 134 aufweist.

Bei der zweiten Ausführungsform der Zylinderkopfdichtung 100 ist somit eine bessere Abdichtung des Brennraums gewährleistet.

Im übrigen stimmt die zweite Ausführungsform einer Zylinderkopfdichtung 100 hinsichtlich Aufbau und Funktion mit der ersten Ausführungsform überein, auf deren vorstehende Beschreibung insoweit Bezug genommen wird.

Eine in Fig. 4 dargestellte, nicht erfindungsgemäße, aber das Verständnis der Erfindung erleichternde dritte Ausführungsform einer Zylinderkopfdichtung 100 unterscheidet sich von der vorstehend beschriebenen zweiten Ausführungsform lediglich dadurch, daß die Kuppen 144 der Kompensationssicken 138a, 138b der oberen Kompensationsplatte 106 einerseits und der unteren Kompensationsplatte 108 andererseits einander nicht - wie bei der zweiten Ausführungsform - zugewandt, sondern einander abgewandt sind, so daß sich die Kompensationssicken 138a, 138b zu der jeweils angrenzenden Zwischenplatte 110 bzw. 112 hin vorwölben.

Im übrigen stimmt die dritte Ausführungsform einer Zylinderkopfdichtung 100 hinsichtlich Aufbau und Funktion mit der zweiten Ausführungsform überein, auf deren vorstehende Beschreibung insoweit Bezug genommen wird.

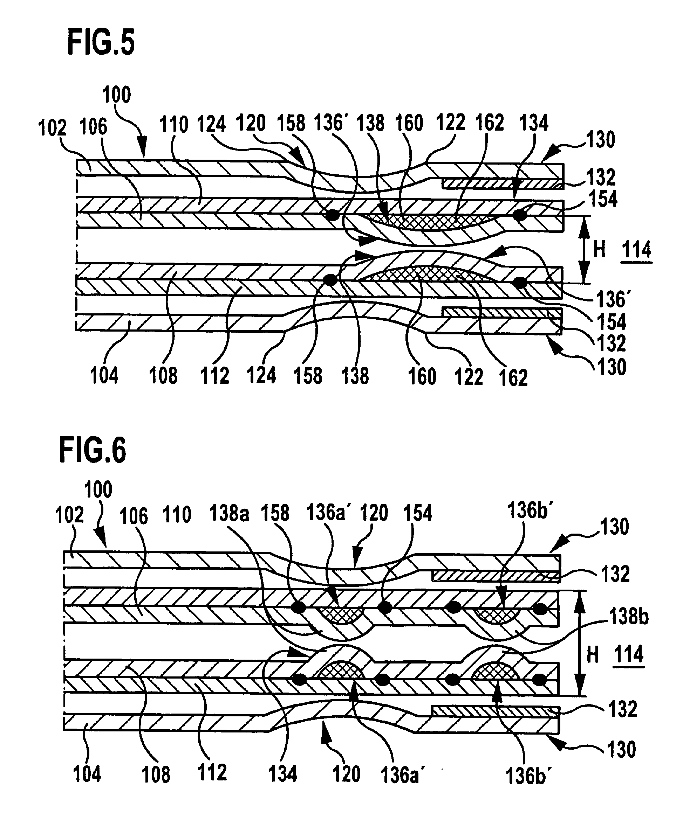

Ein in Fig. 5 dargestellte vierte Ausführungsform einer Zylinderkopfdichtung 100 unterscheidet sich von der vorstehend beschriebenen ersten Ausführungsform dadurch, daß die Kompensationsplatten 106, 108 und die jeweils angrenzenden Zwischenplatten 110 bzw. 112 nicht frei relativ zueinander beweglich sind, sondern längs jeweils einer inneren Schweißnaht 154 und längs einer äußeren Schweißnaht 158 aneinander festgelegt sind, um zwischen der Kompensationssicke 138 der jeweiligen Kompensationsplatte 106, 108 einerseits und der jeweils zugeordneten Zwischenplatte 110 bzw. 112 andererseits eine geschlossene Kammer 160 auszubilden, welche mit einem fließfähigen Material 162 gefüllt ist.

Dieses fließfähige Material kann beispielsweise Polytetrafluorethylen oder ein modifiziertes Polytetrafluorethylen sein.

Ferner kann als fließfähiges Material auch ein metallisches Material, insbesondere eine metallische Legierung, vorzugsweise eine Pb-Legierung, beispielsweise eine Pb-Sn-Legierung, verwendet werden.

Durch die Ausfüllung der Kompensationssicken 138 mit dem fließfähigen Material 162 in den Kammern 160 wird erreicht, daß die Kompensationselemente 136' der Kompensationseinrichtung 134 keine rein elastischen Kompensationselemente sind, wie bei den ersten drei Ausführungsformen der Zylinderkopfdichtung 100, sondern vielmehr gedämpft-elastische Kompensationselemente 136', welche ein gedämpft-elastisches Schwingungsverhalten zeigen und sich bei einer Änderung der mittleren lokalen Dichtspalthöhe gemäß einer Exponentialfunktion mit einer Relaxationszeit τ an eine neue Sickenhöhe anpassen, so daß auch die Gesamthöhe H der Kompensationseinrichtung 134 einer Änderung des Betriebszustandes des Motors mit der Relaxationszeit τ folgt.

Da die Kammern 160 geschlossen sind, bleibt das Gesamtvolumen des fließfähigen Materials 162 in den Kammern 160 im wesentlichen konstant, so daß eine lokale Erhöhung oder Erniedrigung der gedämpft-elastischen Kompensationselemente 136' mit einer entsprechend entgegengesetzten Erniedrigung bzw. Erhöhung derselben an einer anderen Stelle längs der Umfangsrichtung der Brennraum-Durchgangsöffnung einhergeht.

Die über den Umfang der Kompensationseinrichtung 134 gemittelte Änderung der Höhe H der Kompensationseinrichtung 134 ist daher bei dieser Ausführungsform im wesentlichen gleich null.

Dennoch können mittels der Kompensationseinrichtung 134 lokale Dichtspaltänderungen, welche durch eine Änderung des Betriebszustandes des Motors hervorgerufen werden, kompensiert werden, da das fließfähige Material 162 sich längs des Umfangs der Kompensationseinrichtung 134 in Abhängigkeit von den jeweiligen Pressungsverhältnissen bei jedem Betriebszustand des Motors anders verteilen kann.

Im übrigen stimmt die vierte Ausführungsform einer Zylinderkopfdichtung 100 hinsichtlich Aufbau und Funktion mit der ersten Ausführungsform überein, auf deren vorstehende Beschreibung insoweit Bezug genommen wird.

Eine in Fig. 6 dargestellte fünfte Ausführungsform einer Zylinderkopfdichtung 100 unterscheidet sich von der in Fig. 5 dargestellten vierten Ausführungsform lediglich dadurch, daß die Kompensationseinrichtung 134 nicht nur ein gedämpft-elastisches Kompensationselement 136' an jeder Kompensationsplatte 106, 108, sondern statt dessen jeweils ein äußeres Kompensationselement 136a' und ein inneres Kompensationselement 136b' umfaßt.

Dabei stützen die äußeren Kompensationselemente 136a' die Brennraumsicken 120 und die inneren Kompensationselemente 136b' die Verformungsbegrenzungseinrichtungen 130 ab.

Von ihrem Aufbau her entsprechen die Kompensationselemente 136a' und 136b' den gedämpft-elastischen Kompensationselementen 136' der vierten Ausführungsform.

Die Ausbildung und Anordnung der äußeren und inneren Kompensationssicken 138a bzw. 138b dieser Ausführungsform stimmt mit denjenigen der vorstehend beschriebenen und in Fig. 3 dargestellten zweiten Ausführungsform überein.

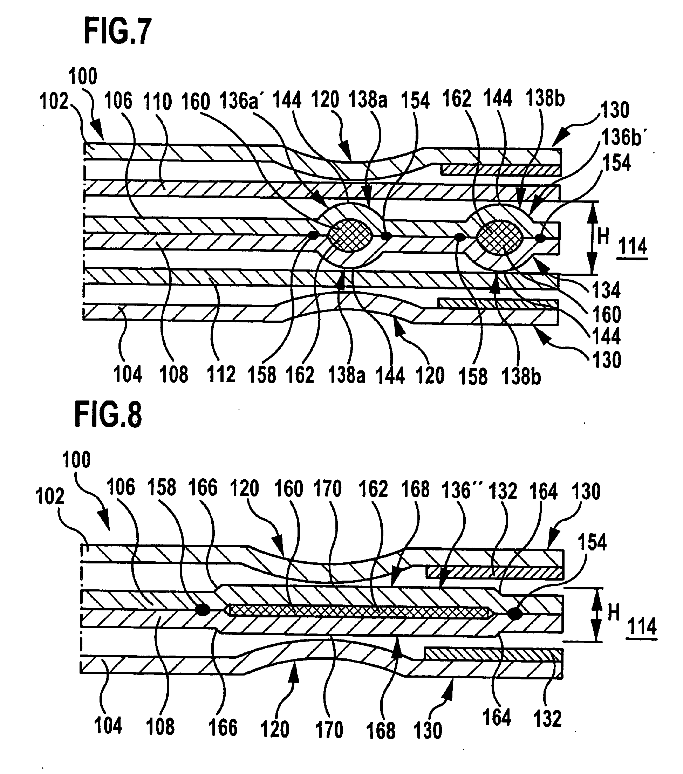

Eine in Fig. 7 dargestellte sechste Ausführungsform einer Zylinderkopfdichtung 100 unterscheidet sich von der vorstehend beschriebenen fünften Ausführungsform dadurch, daß die äußeren Kompensationssicken 138a und die inneren Kompensationssicken 138b an den Kompensationsplatten 106, 108 nicht einander zugewandte Kuppen, sondern vielmehr voneinander abgewandte Kuppen 144 aufweisen.

Ferner sind die Kompensationsplatten 106 und 108 nicht an der jeweils benachbarten Zwischenplatte 110 bzw. 112, sondern statt dessen mittels vier Schweißnähten 154, 158 aneinander festgelegt, wobei zwei geschlossene Kammern 160 entstehen, welche jeweils durch zwei Kompensationssicken 138a bzw. 138b, eine zugehörige innere Schweißnaht 154 und eine zugehörige äußere Schweißnaht 158 begrenzt sind und mit einem fließfähigen Material 162 gefüllt sind.

Auf diese Weise umfaßt die Kompensationseinrichtung 134 der Zylinderkopfdichtung 100 ein äußeres gedämpft-elastisches Kompensationselement 136a', welches die Brennraumsicken 120 abstützt, und ein inneres gedämpft-elastisches Kompensationselement 136b', welches die Verformungsbegrenzungseinrichtungen 130 abstützt.

Die Kuppen 144 der Kompensationssicken 138a des äußeren Kompensationselements 136a' definieren dabei zwei äußere Abdichtlinien und die Kuppen 144 der Kompensationssicken 138b des inneren Kompensationselements 136b' definieren zwei innere Abdichtlinien der Kompensationseinrichtung 134.

Im übrigen stimmt die sechste Ausführungsform einer Zylinderkopfdichtung hinsichtlich Aufbau und Funktion mit der fünften Ausführungsform überein, auf deren vorstehende Beschreibung insoweit Bezug genommen wird.

Eine in Fig. 8 dargestellte siebte Ausführungsform einer Zylinderkopfdichtung 100 unterscheidet sich von der vorstehend beschriebenen vierten Ausführungsform dadurch, daß keine Zwischenplatten zwischen den gesickten Deckplatten 102, 104 einerseits und den Kompensationsplatten 106, 108 andererseits vorgesehen sind.

Ferner weisen die Kompensationsplatten 106 und 108 keine elastischen Kompensationssicken auf, sondern sind statt dessen jeweils mit einer inneren Abkröpfung 164 und einer äußeren Abkröpfung 166 versehen, welches sich jeweils rings um die Brennraum-Durchgangsöffnung 114 erstrecken.

Zwischen der inneren Abkröpfung 164 und der äußeren Abkröpfung 166 jeder Kompensationsplatte 106, 108 liegt jeweils ein über die übrigen Bereiche der jeweiligen Kompensationsplatte 106, 108 überstehender Anlagebereich 168, an welchem die Brennraumsicke 120 der jeweils benachbarten gesickten Deckplatte 102 bzw. 104 im Betriebszustand der Zylinderkopfdichtung 100 anliegt.

Die beiden Kompensationsplatten 106, 108 sind längs einer radial innerhalb der inneren Abkröpfungen 164 liegenden inneren Schweißnaht 154 und längs einer radial außerhalb der äußeren Abkröpfungen 166 liegenden äußeren Schweißnaht 158 aneinander festgelegt, so daß zwischen den beiden Anlagebereichen 168 der Kompensationsplatten 106, 108 eine geschlossene Kammer 160 ausgebildet ist, welche mit einem fließfähigen Material 162 gefüllt ist.

Die Anlagebereiche 168, die Abkröpfungen 164 und 166 sowie die mit dem fließfähigen Material 162 gefüllte geschlossene Kammer 160 bilden zusammen ein plastisch-reversibles Kompensationselement 136" der Kompensationseinrichtung 134 der siebten Ausführungsform einer Zylinderkopfdichtung 100.

Das fließfähige Material 162 kann sich bei Änderungen des Betriebszustandes des Motors und damit verbundenen Änderungen der lokalen Dichtspalthöhe durch Fließen längs der Umfangsrichtung der Kammer 160 so umverteilen, daß die jeweiligen lokalen Änderungen der Dichtspalthöhe durch eine entsprechende Änderung der Höhe des plastisch-reversiblen Kompensationselements 136" kompensiert werden.

Die Höhe H des Kompensationselements 136" entspricht dabei dem Abstand der den Brennraumsicken 120 zugewandten Anlageflächen 170 der Anlagebereiche 168 der Kompensationsplatten 106, 108.

Da das plastisch-reversible Kompensationselement 136" anders als die mit elastischen oder gedämpft-elastischen Kompensationselementen gebildeten Kompensationseinrichtungen der vorstehend beschriebenen Ausführungsformen kein elastisches Schwingungsverhalten aufweist, sondern seine Höhe H nur bei Änderung des Betriebszustandes des Motors, und zwar mit einer im Bereich von mehreren Minuten liegenden Relaxationszeit, ändert, ist diese Ausführungsform besonders dazu geeignet, durch Änderung des Betriebszustands des Motors, insbesondere dessen Temperatur, bedingte Variationen der Pressungsverteilung längs des Umfangs der Brennraum-Durchgangsöffnung 114 zu kompensieren und dabei sowohl eine unzulässige Verformung der Brennraumsicken 120 als auch eine zu starke Abnahme der Dichtflächenpressung an den Abdichtlinien der Brennraumsicken 120 auszuschließen.

Im übrigen stimmt die siebte Ausführungsform einer Zylinderkopfdichtung 100 hinsichtlich Aufbau und Funktion mit der vierten Ausführungsform überein, auf deren vorstehende Beschreibung insoweit Bezug genommen wird.

## Patentansprüche

1. Zylinderkopfdichtung, umfassend mindestens eine Dichtungsplatte (102, 104) mit mindestens einer Brennraum-Durchgangsöffnung (114) und einer die Brennraum-Durchgangsöffnung (114) umschließenden, elastisch höhenverformbaren Brennraumsicke (120) und mindestens eine die Verformung der Brennraumsicke (120) begrenzende Verformungsbegrenzungseinrichtung (130),
**dadurch gekennzeichnet, dass**
die Verformungsbegrenzungseinrichtung (130) im Bereich zwischen der Brennraumsicke (120) und der Brennraum-Durchgangsöffnung (114) angeordnet ist,
dass die Zylinderkopfdichtung (100) eine Kompensationseinrichtung (134) zur zumindest teilweisen Kompensation der Änderungen der auf die Brennraumsicke (120) und die Verformungsbegrenzungseinrichtung (130) wirkenden dynamischen Dichtspaltschwingungen bei einer Änderung des Betriebszustands der Zylinderkopfdichtung (100) umfasst, wobei die Kompensationseinrichtung (134) mindestens ein Kompensationselement (136; 136'; 136") umfasst, dessen Höhe sich bei einer Änderung des Betriebszustands des Motors im wesentlichen reversibel verändert, und wobei die Kompensationseinrichtung (134) sowohl die Brennraumsicke (120) als auch die Verformungsbegrenzungseinrichtung (130) zumindest teilweise abstützt, und
dass die Kompensationseinrichtung (134) mindestens eine mit einem fließfähigen Material (162) zumindest teilweise gefüllte Kompensationssicke (138) umfasst,
wobei
a) die Kompensationseinrichtung (134) mindestens eine Kompensationsplatte (106, 108) umfasst, die von der mit der Brennraumsicke (120) versehenen Dichtungsplatte (102, 104) der Zylinderkopfdichtung (100) verschieden ist, und die Zylinderkopfdichtung (100) mindestens eine zwischen der Kompensationsplatte (106, 108) und der mit der Brennraumsicke (120) versehenen Dichtungsplatte (102, 104) angeordnete Zwischenplatte (110, 112) umfasst;
und/oder
b) die Kompensationseinrichtung (134) mindestens zwei Kompensationsplatten (106, 108) umfasst, die von der mit der Brennraumsicke (120) versehenen Dichtungsplatte (102, 104) der Zylinderkopfdichtung (100) verschieden sind.

2. Zylinderkopfdichtung nach Anspruch 1, **dadurch gekennzeichnet, dass** das Kompensationselement (136; 136'; 136") sich in der Längsrichtung der Brennraumsicke (120) erstreckt und dass die Änderung der Höhe des Kompensationselements (136; 136'; 136") in Abhängigkeit vom Betriebszustand des Motors längs der Längsrichtung des Kompensationselements (136; 136'; 136") variiert.

3. Zylinderkopfdichtung nach einem der Ansprüche 1 oder 2, **dadurch gekennzeichnet, dass** die Kompensationseinrichtung (134) mindestens ein Kompensationselement (136; 136'; 136") umfasst, welches sowohl die Brennraumsicke (120) als auch die Verformungsbegrenzungseinrichtung (130) zumindest teilweise abstützt.

4. Zylinderkopfdichtung nach einem der Ansprüche 1 bis 3, **dadurch gekennzeichnet, dass** die Kompensationseinrichtung (134) mindestens ein Kompensationselement (136a; 136a'), welches die Brennraumsicke (120) zumindest teilweise abstützt, und mindestens ein weiteres Kompensationselement (136b; 136b') umfasst, welches die Verformungsbegrenzungseinrichtung (130) zumindest teilweise abstützt.

5. Zylinderkopfdichtung nach einem der Ansprüche 1 bis 4, **dadurch gekennzeichnet, dass** die Gesamthöhe (H) der die Brennraumsicke (120) abstützenden Kompensationselemente im wesentlichen gleich groß ist wie die Gesamthöhe (H) der die Verformungsbegrenzungseinrichtung (130) abstützenden Kompensationselemente.

6. Zylinderkopfdichtung nach einem der Ansprüche 1 bis 5, **dadurch gekennzeichnet, dass** die Kompensationseinrichtung (134) im wesentlichen spiegelsymmetrisch zu einer Mittelebene (145) der Kompensationseinrichtung ausgebildet ist.

7. Zylinderkopfdichtung nach einem der Ansprüche 1 bis 6, **dadurch gekennzeichnet, dass** die Kompensationseinrichtung (134) ein elastisch höhenveränderliches Kompensationselement (136) umfasst.

8. Zylinderkopfdichtung nach einem der Ansprüche 1 bis 7, **dadurch gekennzeichnet, dass** ein äußerer Sickenrand (142) der Kompensationssicke (138) in einem größeren Abstand vom Mittelpunkt (116) der Brennraum-Durchgangsöffnung (114) verläuft als ein innerer Sickenrand (122) der Brennraumsicke (120).

9. Zylinderkopfdichtung nach einem der Ansprüche 1 bis 8, **dadurch gekennzeichnet, dass** ein innerer Sickenrand (140) der Kompensationssicke (138) in einem kleineren Abstand vom Mittelpunkt (116) der Brennraum-Durchgangsöffnung (114) verläuft als ein äußerer Rand (131) der Verformungsbegrenzungseinrichtung (130).

10. Zylinderkopfdichtung nach einem der Ansprüche 1 bis 9, **dadurch gekennzeichnet, dass** die Kompensationseinrichtung (134) mindestens zwei Kompensationssicken (138) umfasst.

11. Zylinderkopfdichtung nach Anspruch 10, **dadurch gekennzeichnet, dass** mindestens zwei Kompensationssicken (138a, 138b) an derselben Kompensationsplatte (106, 108) der Kompensationseinrichtung (134) ausgebildet sind.

12. Zylinderkopfdichtung nach Anspruch 10, **dadurch gekennzeichnet, dass** mindestens zwei Kompensationssicken (138) an zwei verschiedenen Kompensationsplatten (106, 108) der Kompensationseinrichtung (134) ausgebildet sind.

13. Zylinderkopfdichtung nach Anspruch 12, **dadurch gekennzeichnet, dass** die Kompensationssicken (138) als Vollsicken ausgebildet sind, deren Kuppen einander zugewandt sind.

14. Zylinderkopfdichtung nach Anspruch 12, **dadurch gekennzeichnet, dass** die Kompensationssicken (138a, 138b) als Vollsicken ausgebildet sind, deren Kuppen (144) einander abgewandt sind.

## Claims

1. Cylinder head gasket, comprising at least one gasket sheet (102, 104), which has at least one combustion chamber through-opening (114) and an elastically vertically deformable combustion chamber bead (120) surrounding the combustion chamber through-opening (114), and at least one deformation-limiting device (130) for limiting the deformation of the combustion chamber bead (120),
**characterized in that**
the deformation-limiting device (130) is disposed in the region between the combustion chamber bead (120) and the combustion chamber through-opening (114),
that the cylinder head gasket (100) comprises a compensating device (134) for at least partially compensating the changes of the dynamic sealing gap oscillations acting upon the combustion chamber bead (120) and the deformation-limiting device (130) upon a change of the operating state of the cylinder head gasket (100), wherein the compensating device (134) comprises at least one compensating element (136; 136'; 136"), the height of which varies substantially reversibly upon a change of the operating state of the engine, and wherein the compensating device (134) at least partially supports both the combustion chamber bead (120) and the deformation-limiting device (130), and
that the compensating device (134) comprises at least one compensating bead (138), which is at least partially filled with a flowable material (162), wherein
a) the compensating device (134) comprises at least one compensating sheet (106, 108), which is different from the gasket sheet (102, 104) of the cylinder head gasket (100) that is provided with the combustion chamber bead (120), and the cylinder head gasket (100) comprises at least one intermediate sheet (110, 112), which is disposed between the compensating sheet (106, 108) and the gasket sheet (102, 104) provided with the combustion chamber bead (120);
and/or
b) the compensating device (134) comprises at least two compensating sheets (106, 108), which are different from the gasket sheet (102, 104) of the cylinder head gasket (100) that is provided with the combustion chamber bead (120).

2. Cylinder head gasket according to claim 1, **characterized in that** the compensating element (136; 136'; 136") extends in the longitudinal direction of the combustion chamber bead (120) and that the change of the height of the compensating element (136; 136'; 136") varies along the longitudinal direction of the compensating element (136; 136'; 136") in dependence upon the operating state of the engine.

3. Cylinder head gasket according to one of claims 1 or 2, **characterized in that** the compensating device (134) comprises at least one compensating element (136; 136'; 136"), which at least partially supports both the combustion chamber bead (120) and the deformation-limiting device (130).

4. Cylinder head gasket according to one of claims 1 to 3, **characterized in that** the compensating device (134) comprises at least one compensating element (136a; 136a'), which at least partially supports the combustion chamber bead (120), and at least one further compensating element (136b; 136b'), which at least partially supports the deformation-limiting device (130).

5. Cylinder head gasket according to one of claims 1 to 4, **characterized in that** the total height (H) of the compensating elements that support the combustion chamber bead (120) is substantially equal to the total height (H) of the compensating elements that support the deformation-limiting device (130).

6. Cylinder head gasket according to one of claims 1 to 5, **characterized in that** the compensating device (134) is constructed substantially mirror-symmetrically relative to a centre plane (145) of the compensating device.

7. Cylinder head gasket according to one of claims 1 to 6, **characterized in that** the compensating device (134) comprises a compensating element (136) that is elastically variable in height.

8. Cylinder head gasket according to one of claims 1 to 7, **characterized in that** an outer bead edge (142) of the compensating bead (138) extends at a greater distance from the centre (116) of the combustion chamber through-opening (114) than an inner bead edge (122) of the combustion chamber bead (120).

9. Cylinder head gasket according to one of claims 1 to 8, **characterized in that** an inner bead edge (140) of the compensating bead (138) extends at a smaller distance from the centre (116) of the combustion chamber through-opening (114) than an outer edge (131) of the deformation-limiting device (130).

10. Cylinder head gasket according to one of claims 1 to 9, **characterized in that** the compensating device (134) comprises at least two compensating beads (138).

11. Cylinder head gasket according to claim 10, **characterized in that** at least two compensating beads (138a, 138b) are formed on the same compensating sheet (106, 108) of the compensating device (134).

12. Cylinder head gasket according to claim 10, **characterized in that** at least two compensating beads (138) are formed on two different compensating sheets (106, 108) of the compensating device (134).

13. Cylinder head gasket according to claim 12, **characterized in that** the compensating beads (138) take the form of full beads, the crests of which are directed towards one another.

14. Cylinder head gasket according to claim 12, **characterized in that** the compensating beads (138a, 138b) take the form of full beads, the crests (144) of which are directed away from one another.

## Revendications

1. Joint de culasse comportant au moins une plaque d'étanchéité (102, 104) pourvue d'au moins une ouverture traversante de chambre de combustion (114) et d'une moulure de chambre de combustion (120) élastiquement déformable quant à sa hauteur et entourant l'ouverture traversante de chambre de combustion (114) et au moins un dispositif de limitation de déformation (130) qui limite la déformation de la moulure de chambre de combustion (120),
**caractérisé en ce que**
le dispositif de limitation de déformation (130) est agencé dans la région entre la moulure de chambre de combustion (120) et l'ouverture traversante de chambre de combustion (114),
le joint de culasse (100) comprend un dispositif de compensation (134) pour compenser au moins partiellement les oscillations de l'intervalle d'étanchéité qui agissent de façon dynamique sur la moulure de chambre de combustion (120) et sur le dispositif de limitation de déformation (130) lors d'une modification de l'état de fonctionnement du joint de culasse (100), le dispositif de compensation (134) comportant au moins un élément de compensation (136 ; 136' ; 136") dont la hauteur se modifie de façon sensiblement réversible lors d'un changement de l'état de fonctionnement du moteur et le dispositif de compensation (134) soutenant au moins partiellement aussi bien la moulure de chambre de combustion (120) que le dispositif de limitation de déformation (130), et
le dispositif de compensation (134) comprend au moins une moulure de compensation (138) remplie au moins partiellement d'un matériau capable de s'écouler (162),
dans lequel
a) le dispositif de compensation (134) comprend au moins une plaque de compensation (106, 108) qui est différente de la plaque d'étanchéité (102, 104), du joint de culasse (100), pourvue de la moulure de chambre de combustion (120), et le joint de culasse (100) comprend au moins une plaque intermédiaire (110, 112) agencée entre la plaque de compensation (106, 108) et la plaque d'étanchéité (102, 104) pourvue de la moulure de chambre de combustion (120) ;
et/ou
b) le dispositif de compensation (134) comprend au moins deux plaques de compensation (106, 108) qui sont différentes de la plaque d'étanchéité (102, 104), pourvue de la moulure de chambre de combustion (120), du joint de culasse (100).

2. Joint de culasse selon la revendication 1, **caractérisé en ce que** l'élément de compensation (136 ; 136' ; 136") s'étend en direction longitudinale de la moulure de chambre de combustion (120), et **en ce que** la modification de la hauteur de l'élément de compensation (136; 136'; 136") varie le long de la direction longitudinale de l'élément de compensation (136 ; 136' ; 136") en fonction de l'état de fonctionnement du moteur.

3. Joint de culasse selon l'une ou l'autre des revendications 1 et 2, **caractérisé en ce que** le dispositif de compensation (134) comprend au moins un élément de compensation (136 ; 136' ; 136") qui soutient au moins partiellement aussi bien la moulure de chambre de combustion (120) que le dispositif de limitation de déformation (130).

4. Joint de culasse selon l'une des revendications 1 à 3, **caractérisé en ce que** le dispositif de compensation (134) comprend au moins un élément de compensation (136a ; 136a') qui soutient au moins partiellement la moulure de chambre de combustion (120), et au moins un autre élément de compensation (136b ; 136b') qui soutient au moins partiellement le dispositif de limitation de déformation (130).

5. Joint de culasse selon l'une des revendications 1 à 4, **caractérisé en ce que** la hauteur totale (H) des éléments de compensation soutenant la moulure de chambre de combustion (120) est sensiblement égale à la hauteur totale (H) des éléments de compensation soutenant le dispositif de limitation de déformation (130).

6. Joint de culasse selon l'une des revendications 1 à 5, **caractérisé en ce que** le dispositif de compensation (134) est réalisé sensiblement à symétrie par rapport à un plan médian (145) du dispositif de compensation.

7. Joint de culasse selon l'une des revendications 1 à 6, **caractérisé en ce que** le dispositif de compensation (134) comprend un élément de compensation (136) à hauteur élastiquement variable.

8. Joint de culasse selon l'une des revendications 1 à 7, **caractérisé en ce qu'**un bord extérieur (142) de la moulure de compensation (138) s'étend à une distance du centre (116) de l'ouverture traversante de chambre de combustion (114), qui est supérieure à la distance d'un bord intérieur (122) de la moulure de chambre de combustion (120).

9. Joint de culasse selon l'une des revendications 1 à 8, **caractérisé en ce qu'**un bord intérieur (140) de la moulure de compensation (138) s'étend à une distance du centre (116) de l'ouverture traversante de chambre de combustion (114), qui est inférieure à la distance d'un bord extérieur (131) du dispositif de limitation de déformation (130).

10. Joint de culasse selon l'une des revendications 1 à 9, **caractérisé en ce que** le dispositif de compensation (134) comprend au moins deux moulures de compensation (138).

11. Joint de culasse selon la revendication 10, **caractérisé en ce qu'**au moins deux moulures de compensation (138a, 138b) sont réalisées sur la même plaque de compensation (106, 108) du dispositif de compensation (134).

12. Joint de culasse selon la revendication 10, **caractérisé en ce qu'**au moins deux moulures de compensation (138) sont réalisées sur deux plaques de compensation différentes (106, 108) du dispositif de compensation (134).

13. Joint de culasse selon la revendication 12, **caractérisé en ce que** les moulures de compensation (138) sont réalisées sous forme de moulures pleines dont les calottes sont tournées l'une vers l'autre.

14. Joint de culasse selon la revendication 12, **caractérisé en ce que** les moulures de compensation (138a, 138b) sont réalisées sous forme de moulures pleines dont les calottes (144) sont détournées l'une de l'autre.
